# DEMANDE DE BREVET EUROPEEN

(11) **EP 1 449 693 A2**
(43) Date de publication de la demande: **25.08.2004**
(21) Numéro de dépôt: 04290181.9
(22) Date de dépôt: 23.01.2004
(51) Int. Cl.: B60J 1/20, E06B 3/56, G10K 11/16

(54) **Ensemble de masquage d'une ouverture ménagée dans une structure, notamment pare-brise de véhicule.**

(30) Priorité: 21.02.2003 FR 0302184
(71) Demandeur: Peugeot Citroen Automobiles SA, 78140 Vélizy Villacoublay (FR)
(72) Inventeur: van Herpe, François, 92100 Boulogne-Bilancourt (FR); Merlette, Nicolas, 92370 Chaville (FR)
(74) Mandataire: Jacobson, Claude

(57) **Abrégé**

Cet ensemble comprend un panneau (11) possédant une surface (23) de liaison avec la structure (13) et ayant des dimensions adaptées pour couvrir au moins partiellement l'ouverture, et des moyens (15) de fixation du panneau (11) sur la structure (13). Cet ensemble comprend en outre des moyens (17) d'amortissement des vibrations du panneau (11) à base d'au moins un matériau visco-élastique, disposés au moins en partie entre la surface de liaison (23) du panneau (11) et la surface en regard sur la structure (13).

Application aux vitrages de véhicules automobiles.

## Description

La présente invention est relative à un ensemble de masquage d'une ouverture ménagée dans une structure, notamment pare-brise de véhicule, du type comprenant :
- un panneau possédant une surface de liaison avec la structure et ayant des dimensions adaptées pour couvrir au moins partiellement l'ouverture ; et
- des moyens de fixation de la surface de liaison sur la structure.

Les ensembles de la présente invention s'appliquent notamment à l'amélioration du confort acoustique dans les véhicules automobiles, les aéronefs ou les bâtiments.

Dans le cas de véhicules automobiles, une grande partie du bruit perçu dans l'habitacle résulte de vibrations dues au moteur et au contact des roues sur la chaussée. Ces vibrations se propagent à travers l'ossature du véhicule et atteignent les panneaux d'habitacle, notamment le pare-brise.

Lorsque ces panneaux vibrent, ils agissent comme des membranes de haut-parleur et rayonnent un bruit gênant pour les passagers du véhicule.

Comme il est bien connu, les ensembles du type précité comprennent un pare-brise constitué de deux couches de verre séparées par un film intercalaire en poly(vinyl butyral) ou PVB. Dans le cas de pare-brises dits « PVB acoustique », ce film intercalaire est adapté pour absorber les vibrations de fréquence de l'ordre de 4000 Hz.

Cependant, de tels ensembles ne donnent pas entière satisfaction. En effet, compte tenu des difficultés de fabrication et des matériaux employés, le coût de tels pare-brises est extrêmement élevé par rapport à l'amélioration des propriétés acoustiques, notamment pour les fréquences inférieures à 300 Hz.

L'invention a pour but principal de remédier à cet inconvénient, c'est-à-dire de disposer d'ensembles de masquage peu onéreux, permettant d'améliorer de manière significative le confort acoustique dans l'habitacle de véhicules.

A cet effet, l'invention a pour objet un ensemble de masquage du type précité, caractérisé en ce qu'il comprend des moyens d'amortissement des vibrations du panneau à base d'au moins un matériau visco-élastique, disposés entre la surface de liaison du panneau et la surface en regard de la structure.

Comme il est bien connu, un matériau visco-élastique est un matériau possédant des propriétés à la fois visqueuses et élastiques. Ainsi, une partie de l'énergie mécanique appliquée à un tel matériau est stockée élastiquement par le matériau et une autre partie est dissipée sous forme de chaleur, en fonction de la température et de la fréquence de sollicitation de ce matériau.

L'ensemble suivant l'invention peut comporter une ou plusieurs des caractéristiques suivantes, prises isolément ou suivant toutes leurs combinaisons possibles :
- les moyens d'amortissement couvrent totalement la surface de liaison du panneau ;
- les moyens d'amortissement couvrent partiellement la surface de liaison du panneau, suivant la périphérie et/ou suivant la largeur de celle-ci ;
- les moyens d'amortissement comprennent au moins une bande en matériau visco-élastique ;
- ladite bande comprend au moins une face préencollée ;
- ladite bande comporte au moins une face non préencollée, et un matériau adhésif est appliqué sur cette ou ces faces de ladite bande, et/ou sur la surface en regard, pour réaliser ladite fixation ;
- les deux faces de ladite bande sont préencollées ;
- les moyens de fixation et les moyens d'amortissement sont disposés de manière adjacente entre la surface de liaison du panneau et la surface en regard de la structure ;
- le matériau viscoélastique est un élastomère vulcanisé ou réticulé ;
- les moyens d'amortissement sont adaptés pour absorber des vibrations de fréquences inférieures à 300 Hz ;
- des moyens anti-vibrations complémentaires sont disposés au sein du panneau et/ou sur une surface externe du panneau ;
- les moyens anti-vibrations complémentaires sont adaptés pour absorber les vibrations d'une autre gamme de fréquences par rapport aux vibrations absorbées par les moyens d'amortissement.

L'invention a en outre pour objet un véhicule automobile caractérisé en ce qu'il comprend un ensemble de masquage tel que défini ci-dessus.

Des exemples de mise en oeuvre de l'invention vont maintenant être décrits en regard des dessins annexés dans lesquels :
- la Figure 1 est une vue schématique en perspective d'un pare-brise selon l'invention installé sur l'ossature avant d'un véhicule automobile ;
- la Figure 2 est une vue en coupe suivant la ligne II-II d'un détail de la Figure 1 ;
- les Figures 3A à 3D sont des vues schématiques de face de diverses dispositions possibles des moyens de fixation et des moyens d'amortissement sur le pare-brise suivant l'invention ; et
- la Figure 4 est une vue analogue à la Figure 2 d'une autre variante.

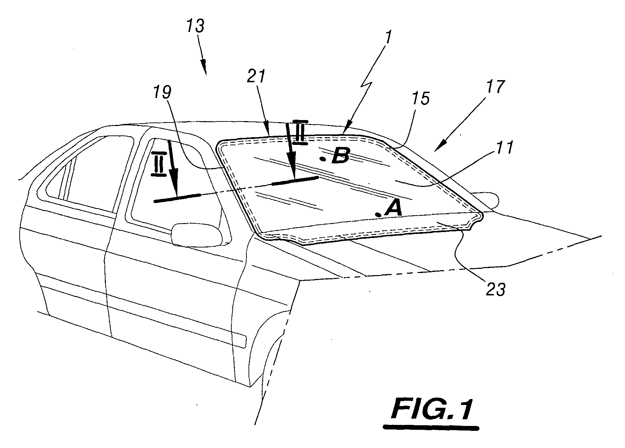

Le véhicule automobile représenté partiellement de manière schématique sur la Figure 1 est muni d'un pare-brise 1 suivant l'invention.

Ce pare-brise comprend un panneau 11 en verre, disposé sur l'ossature 13 avant du véhicule, des moyens 15 de fixation de ce panneau sur l'ossature 13, et des moyens 17 d'amortissement des vibrations du panneau.

Le panneau 11 comprend une plaque de verre en appui sur des montants 19 et des traverses 21 de l'ossature 13 du véhicule. Ce panneau 11 couvre l'ouverture définie par les montants 19 et les traverses 21. Le panneau 11 et l'ossature 13 sont reliés suivant une surface périphérique de liaison 23 du panneau.

Les moyens de fixation 15 permettent de maintenir le panneau 11 sur l'ossature 13. Ces moyens 15 peuvent être mécaniques, ou constitués d'un matériau adhésif tel que mastic ou colle.

Les moyens d'amortissement 17 sont constitués à base d'au moins un matériau visco-élastique. Des matériaux visco-élastiques pouvant être utilisés peuvent inclure de manière non limitative des polymères élastomériques vulcanisés ou réticulés, comme par exemple, le caoutchouc naturel ou des élastomères à base d'isoprène, de butadiène, de styrène butadiène, de chloroprène, de butadiène acrylonitrile, de butyle, d'éthylène propylène, des élastomères acryliques, des élastomères de butyle halogéné, des élastomères à base d'oléfines, des élastomères à base d'uréthane, des élastomères à base d'hydrine, des élastomères à base de polysulfides, des élastomères à base de silicone, des élastomères à base de fluor, et des mélanges de plusieurs de ces élastomères.

Par ailleurs, le matériau visco-élastique est optimisé pour absorber l'énergie mécanique reçue lors de sollicitations notamment de fréquence inférieure à 300 Hz.

Dans un mode de réalisation, des élastomères visco-élastiques vulcanisés sont utilisés. Un exemple d'élastomère de ce type est le SMAC-TANE® 70 commercialisé par la société française SMAC.

Ce matériau se caractérise, d'une part, par une importante capacité d'absorption des chocs et vibrations sur une large bande de fréquences et, d'autre part, par un comportement faiblement visqueux lui permettant d'être utilisé sur des équipements et structures qui peuvent générer des contraintes mécaniques continues sur le matériau. Le module d'Young de ce matériau varie de 5x10⁶ à 2x10⁹ Pa à 20°C pour des sollicitations comprises entre 1 et 10⁷ Hz. Son module de cisaillement varie de 10⁵ à 2x10⁸ Pa dans les mêmes conditions.

Les moyens d'amortissement 17 comprennent des bandes en matériau visco-élastique, d'épaisseur comprise entre 1 mm et 10 mm, préférentiellement entre 4 mm et 6 mm, et de largeur comprise entre 2 mm et 20 mm, préférentiellement entre 7 et 13 mm.

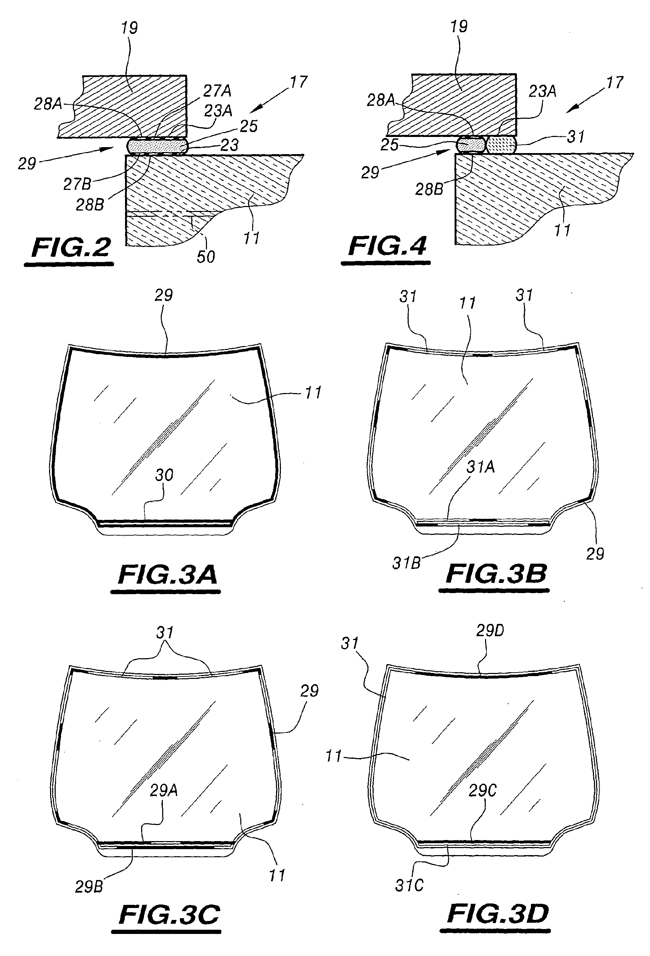

Comme illustré sur la coupe représentée Figure 2, la bande 25 en matériau visco-élastique possède deux faces 27A, 27B préencollées avec des couches d'adhésif respectives 28A, 28B. La bande 25 est disposée entre la surface de liaison 23 et la surface en regard 23A du montant 19. L'adhésif 28A disposé sur la face 27A permet de solidariser le panneau 11 avec la bande 25.

De même, l'adhésif 28B disposé sur la face 27B permet de solidariser le montant 19 avec la bande 25. L'épaisseur du ruban 29 formé par la bande 25 et les deux couches adhésives 28A et 28B correspond à l'épaisseur des moyens de fixation 15.

Dans l'exemple illustré sur la Figure 3A, du ruban 29 (trait gras) comprenant une bande en matériau visco-élastique est disposé de manière continue le long de la surface de liaison 23 à la périphérie du pare-brise 11. Une ligne 30 supplémentaire de ruban 29 est disposée parallèlement au ruban périphérique suivant le bord inférieur du pare-brise 11. Ainsi, les moyens d'amortissement couvrent l'ensemble de la surface de liaison 23 entre le panneau 11 et l'ossature 13, pour l'optimisation des propriétés acoustiques. Par ailleurs, les moyens de fixation 15 de la surface de liaison 23 sur la structure 13 sont constitués par le ruban 29 formé par la bande 25 et les deux couches adhésives 28A, 28B.

En variante, pour réduire le coût (Figures 3B à 3D), avec la même configuration générale, le ruban 29 comprenant une bande en matériau visco-élastique peut couvrir la périphérie de la surface de liaison 23 de manière partielle. Dans ce cas, des joints de colle 31 d'épaisseur correspondante sont disposés sur la portion de la surface de liaison 23 qui est libre de ruban 29, et alternent avec des portions de ce ruban.

Dans la variante illustrée Figure 3B, des joints de colle 31A, 31B sont disposées parallèlement et de manière partielle et alternée le long des deux lignes du bord inférieur du pare-brise 11.

La variante illustrée Figure 3C diffère de la précédente par le fait que des rubans 29A, 29B comprenant une bande en matériau visco-élastique sont disposés avec des zones de chevauchement le long des deux lignes du bord inférieur du pare-brise 11.

Dans une autre variante illustrée Figure 3D, un seul ruban 29C comprenant une bande en matériau visco-élastique est disposé parallèlement à un joint de colle 31C le long du bord inférieur du pare-brise 11, et un autre ruban 29D est disposé le long de l'essentiel du bord supérieur de ce pare-brise.

Dans une autre variante, illustrée en coupe sur la Figure 4, le joint de colle 31 et le ruban 29 sont disposés de manière adjacente sur l'ensemble de la périphérie du pare-brise 11, ou sur au moins une partie de celle-ci, par exemple suivant l'une des configurations des Figures 3A à 3D.

Dans une autre variante, au moins une des faces 27A, 27B de la bande 25 n'est pas préencollée. Un matériau adhésif peut alors être appliqué sur cette ou ces deux faces 27A, 27B au moment de sa mise en place sur le panneau 11.

De même, le matériau adhésif peut être appliqué sur l'une et/ou l'autre de la surface de liaison 23 du panneau 11 et de la surface en regard de l'ossature 13.

Dans une autre variante, le panneau 11 peut être constitué d'un pare-brise « PVB acoustique » comprenant un film 50 intercalaire en poly(vinyl butyral) adapté pour absorber les vibrations de haute fréquence. Dans ce cas, les propriétés acoustiques de l'ensemble de masquage sont optimisées à la fois pour les basses fréquences par la bande 25 et pour les hautes fréquences par le film intercalaire 50 du panneau 11.

Dans une autre variante, des ensembles de masquage selon l'invention comprenant un panneau en matériau opaque peuvent être utilisés pour la carrosserie de véhicule, notamment pour les ailes de pavillon et les portières.

Enfin, dans une autre variante, la structure peut être constituée par des montants solidaires d'un bâtiment, et le panneau par un élément de vitrage.

A titre d'exemple, un ensemble de masquage selon l'invention est réalisé à partir d'un pare-brise en verre, fixé à l'ossature d'un véhicule automobile à l'aide d'un adhésif double-face comprenant une bande de SMAC-TANE® 70 d'épaisseur 5 mm et de largeur 10 mm. L'adhésif double-face à base de SMACTANE® 70 est disposé conformément à la configuration de la Figure 3A.

Un organe d'excitation (non représenté) est disposé sur la partie inférieure du pare-brise au point A, représenté sur la Figure 1. Cet organe est adapté pour générer une vibration du pare-brise de fréquence variable. Des moyens de mesure (non représentés) de l'amortissement du pare-brise sont disposés au point B.

Par ailleurs, un microphone (non représenté) mesure le bruit perçu dans l'habitacle. L'amortissement moyen est extrait et le bruit dans l'habitacle sont mesurés sur un continuum de fréquence variant de 20 Hz à 320 Hz. Un test comparatif est effectué avec un pare-brise fixé avec un simple adhésif sans moyens d'amortissement. Les résultats sont détaillés dans le tableau ci-après.

| | Ensemble selon l'invention | Pare-brise fixé avec un simple adhésif |
|---|---|---|
| Amortissement modal moyen sur la gamme 0 - 200 Hz (%) | 6,9 | 3,6 |
| Atténuation sonore par rapport au pare-brise fixé avec un simple adhésif (dB) sur la gamme 100 - 300 Hz | - 5 à -10 | -- |

Comme il résulte de ce tableau, l'ensemble selon l'invention permet d'augmenter de manière significative l'amortissement moyen du pare-brise pour la gamme de fréquence allant de 0 à 200 Hz.

Par ailleurs, pour la gamme de fréquence entre 100 Hz et 300 Hz, le bruit dans l'habitacle est diminué de 5 à 10 décibels lorsqu'un ensemble selon l'invention est utilisé, par rapport à un pare-brise muni d'un simple adhésif.

Grâce à l'invention qui vient d'être décrite, il est possible de disposer d'un ensemble de masquage permettant d'améliorer le confort acoustique dans l'habitacle de véhicules ou à l'intérieur de bâtiments, de manière peu coûteuse. Cet ensemble permet en outre de réduire les vibrations dans des zones de basse fréquence (inférieure à 300 Hz).

Par ailleurs, cet ensemble de masquage est adaptable aussi bien pour des matériaux transparents que pour des matériaux opaques.

## Revendications

1. Ensemble de masquage d'une ouverture ménagée dans une structure (13), notamment pare-brise de véhicule, du type comprenant :
- un panneau (11) possédant une surface périphérique de liaison (23) avec la structure (13) et ayant des dimensions adaptées pour couvrir au moins partiellement l'ouverture ; et
- des moyens (15) de fixation de la surface de liaison (23) sur la structure (13),
**caractérisé en ce qu'**il comprend des moyens d'amortissement (17) des vibrations du panneau (11) à base d'au moins un matériau visco-élastique, disposés entre la surface périphérique de liaison (23) du panneau (11) et la surface (23A) en regard de la structure (13).

2. Ensemble selon la revendication 1, **caractérisé en ce que** les moyens d'amortissement (17) couvrent totalement la surface périphérique de liaison (23) du panneau (11).

3. Ensemble selon la revendication 1, **caractérisé en ce que** les moyens d'amortissement (17) couvrent partiellement la surface périphérique de liaison (23) du panneau (11), suivant la périphérie et/ou suivant la largeur de celle-ci.

4. Ensemble selon l'une des revendications 1 à 3, **caractérisé en ce que** les moyens d'amortissement (17) comprennent au moins une bande (25) en matériau visco-élastique.

5. Ensemble selon la revendication 4, **caractérisé en ce que** ladite bande (25) comprend au moins une face (27A) préencollée.

6. Ensemble selon l'une des revendications 4 ou 5, **caractérisé en ce que** ladite bande comporte au moins une face non préencollée, et **en ce qu'**un matériau adhésif est appliqué sur cette ou ces faces (27A, 27B) de ladite bande (25), et/ou sur la surface en regard, pour réaliser ladite fixation.

7. Ensemble selon la revendication 5, **caractérisé en ce que** les deux faces (27A, 27B) de ladite bande (25) sont préencollées.

8. Ensemble de masquage selon l'une quelconque des revendications 1 à 7, **caractérisé en ce que** les moyens de fixation (15) et les moyens d'amortissement (17) sont disposés de manière adjacente entre la surface périphérique de liaison (23) du panneau (11) et la surface (23A) en regard de la structure (13).

9. Ensemble de masquage selon l'une quelconque des revendications 1 à 8, **caractérisé en ce que** le matériau viscoélastique est un élastomère vulcanisé ou réticulé.

10. Ensemble de masquage selon l'une quelconque des revendications 1 à 9, **caractérisé en ce que** les moyens d'amortissement (17) sont adaptés pour absorber des vibrations de fréquences inférieures à 300 Hz.

11. Ensemble de masquage selon l'une quelconque des revendications 1 à 10, **caractérisé en ce que** des moyens anti-vibrations complémentaires (50) sont disposés au sein du panneau (11) et/ou sur une surface externe du panneau (11).

12. Ensemble de masquage selon la revendication 11, **caractérisé en ce que** les moyens anti-vibrations complémentaires (50) sont adaptés pour absorber les vibrations d'une autre gamme de fréquences par rapport aux vibrations absorbées par les moyens d'amortissement (17).

13. Véhicule automobile **caractérisé en ce qu'**il comprend un ensemble de masquage selon l'une des revendications 1 à 12.
